# EUROPEAN PATENT SPECIFICATION

(11) **EP 0 371 907 B1**
(45) Date of publication and mention of the grant of the patent: **27.04.1994**
(21) Application number: 89630208.0
(22) Date of filing: 01.12.1989
(51) Int. Cl.: C08J 5/24, C08L 79/08

(54) **Method for making a fiber reinforced crosslinked polyimide matrix composite article**
Verfahren zur Fertigung eines Verbundwerkstoffs mit faserverstärkter gehärteter Polyimid-Matrix
Méthode de fabrication d'un composite à matrice de polyimide réticulé renforcée par des fibres

(30) Priority: 01.12.1988 US 278525
(43) Date of publication of application: 06.06.1990
(73) Proprietor: UNITED TECHNOLOGIES CORPORATION, Hartford, CT 06101 (US)
(72) Inventor: Scola, Daniel A., Glastonbury Connecticut 06033 (US); Vontell, John H., Manchester Connecticut 06040 (US)
(74) Representative: Schmitz, Jean-Marie

(56) References cited:
- DE-A- 2 119 887
- US-A- 4 197 339

## Description

The present invention concerns a method for pretreating a prepreg to form an imidized prepreg according to the precharacterizing portion of claim 1 (US-A-4197339).

This invention pertains to thermosetting polyimide resins.

The excellent high temperature mechanical properties of polyimide resins have led to their increased use in high performance applications, particularly in the field of fiber reinforced resin matrix composite materials.

Both thermoplastic and thermosetting polyimide resins are available commercially. The thermosetting resins are the more widely used, despite significant processing difficulties associated with thermosetting resins. A method of processing thermosetting polyimide resins known as the Polymerization of Monomeric Reactants (PMR) employs an easily evaporated solvent, e.g. methanol, to dissolve monomeric polyimide precursors and form a low viscosity solution for fiber impregnation. Typically, reinforcing fibers are impregnated with a solution of monomeric reactants, the solvent is evaporated and the reactants are cured by heating the impregnated fibers under pressure in an autoclave or in a compression mold to form a fiber reinforced polyimide matrix article. In both processes, volatile components, i.e. solvents, impurities and reaction products may become trapped within the resin during cure and cause internal voids and surface blisters.

The DE-A-2119887 describes a process carrying out low pressure operation conditions.

What is needed in the art is a method for making a crosslinked polyimide that is substantially free of internal voids and surface blisters.

The method of pretreating the prepreg according to the present invention is defined in the characterizing portion of claim 1.

The imidized prepreg so formed is substantially free of volatile impurities and volatile reaction products. The method comprises heating a prepreg, said prepreg comprising reinforcing fiber and a reaction mixture and said reaction mixture initially comprising an aromatic diamine, an end cap monomer and an aromatic dianhydride, a diester-diacid of an aromatic dianhydride or a tetracid of an aromatic dianhydride, to a sufficient temperature for a sufficient period of time so that the reaction mixture forms a low viscosity substantially noncrosslinked molten imidized intermediate, and subjecting the prepreg to subatmospheric pressure during the heating so that volatile impurities and volatile reaction products are removed from the prepreg.

A further aspect of the disclosure includes methods for making a fiber reinforced crosslinked polyimide resin matrix composite article, wherein the article is substantially free of internal voids and surface blisters.

A first method for making the article comprises heating a plurality of plies of prepreg according to the above method to form plies of imidized prepreg, stacking the plies of imidized prepreg to form a laminated imidized prepreg and curing the laminated imidized prepreg to form the article.

A second method for making the article comprises stacking a plurality of plies of prepreg to form a laminated prepreg, heating the laminated prepreg according to the method described above to form a laminated imidized prepreg and curing the laminated imidized prepreg to form the article.

The forgoing and other features and advantages of the present invention will become more apparent from the following description and accompanying drawings.

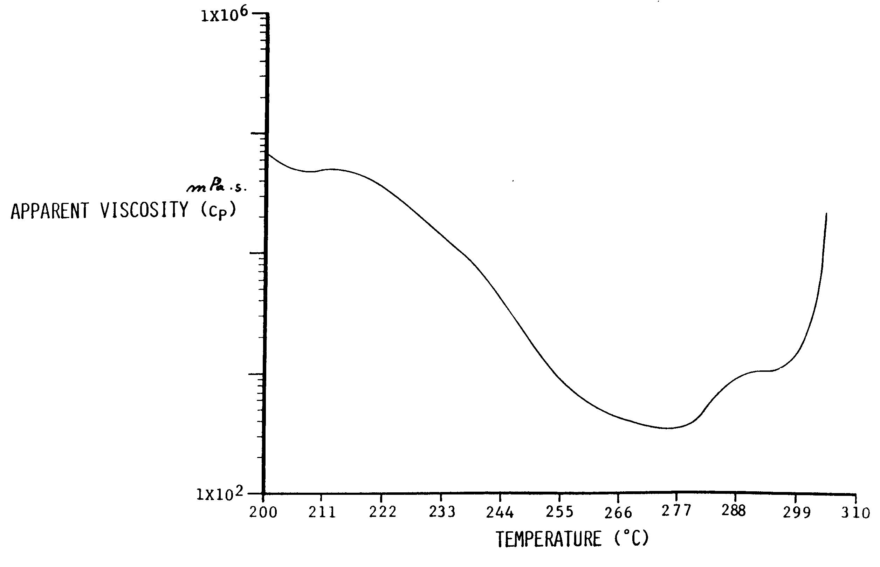

The Figure shows the relationship between apparent viscosity and temperature for PMR15.

The present invention is a process for pretreating a fiber prepreg to form an imidized prepreg. A prepreg comprises reinforcing fibers impregnated with a reaction mixture.

The reaction mixture of the process of the present invention initially comprises a mixture of monomeric reactants. Suitable mixtures of monomeric reactants are those which react upon heating to form a fusible oligomeric imide intermediate wherein the intermediate may be cross linked by further heating to form a thermosetting polyimide resin.

PMR resins exemplify such reaction mixtures. PMR resins initially comprise a mixture of 4,4', methylenedianiline (MDA), the dimethylester of 3,3',4,4' benzophenonetetracarboxylic acid (BTDE) and the monomethylester of 5-norbornene 2,3 dicarboxylic acid (NE). 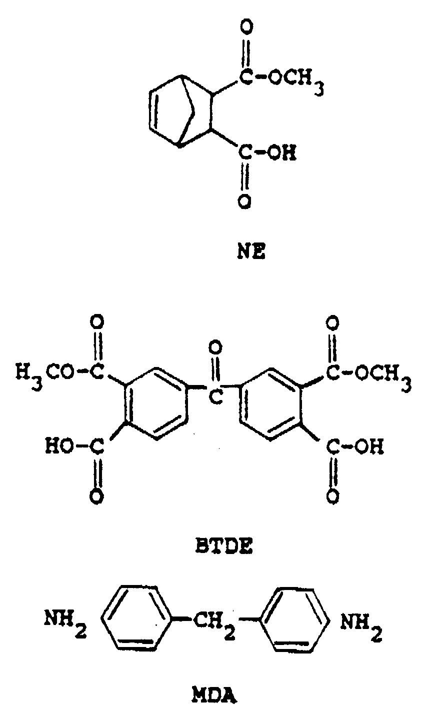
A mixture of MDA, BTDE and NE in a molar ratio of 2 moles NE/n+1 moles MDA/n moles BTDE reacts upon heating to form an imidized oligomer having a theoretical structure: 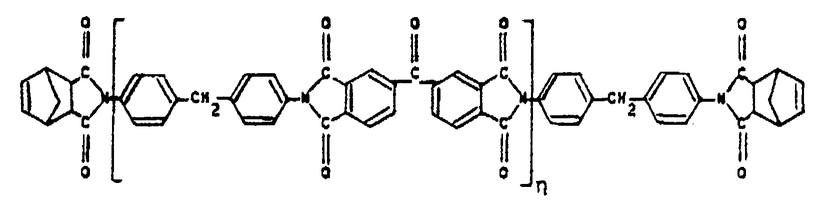
The number of repeating units, n, may be varied to form a homologous series of PMR resins wherein each resin of the series is characterized by the theoretical average molecular weight of the imidized oligomer intermediate. The monomeric molar ratio, and the average molecular weight of the imidized oligomer for a series of homologous PMR resins are given in Table 1.

**Table 1**

| Molar Ratio NE/MDA/BTDE | Average MW of Oligomer | Resin Designation |
|---|---|---|
| 2/2.00/1.00 | 974.806 | PMR-9.75 |
| 2/2.052/1.052 | 1000 | PMR-10 |
| 2/2.258/1.258 | 1100 | PMR-11 |
| 2/2.671/1.67 | 1300 | PMR-13 |
| 2/3.087/2.087 | 1500 | PMR-15 |
| 2/3.497/2.497 | 1700 | PMR-17 |
| 2/4.117/3.117 | 2000 | PMR-20 |

PMR-15 is the most widely used of the PMR resins and a PMR-15 reaction mixture comprising a molar ratio of 2 NE/3.087 MDA/2.087 BTDE is the most preferred reaction mixture for the practice of the process of the present invention.

Analogous compounds may be formulated by substituting an aromatic dianhydride, a tetracid of an aromatic dianhydride or diester-diacid of an aromatic dianhydride for the BTDE. For example, the dimethylester of 4,4', hexafluoroisopropylidene bis(phthalic acid) (HFDE) is substituted for BTDE in an analogous series polyimides commonly known as a PMR-II resins. 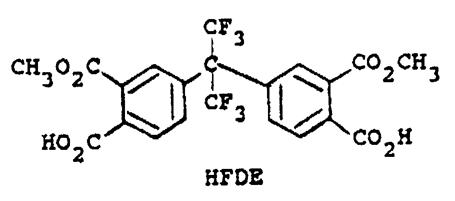
Analogous compounds may be formulated by substituting a different aromatic diamines or an aromatic polyamines for the MDA. For example, Jeffamine AP22 (Texaco) may be substituted for MDA to give an analogous polyimide resin commonly known as LARC-160. 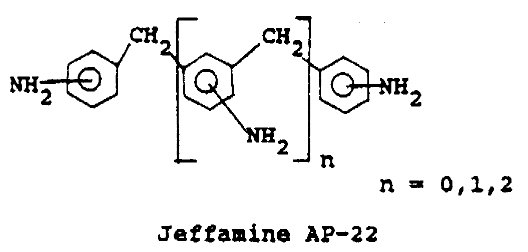
Similarly, paraphenylene diamine (PPDA) is substituted for MDA in PMR-II resins. 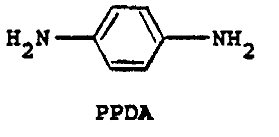
A mixture of PPDA, HFDE and NE in a molar ratio of 2 moles NE/n+1 moles PPDA/n moles HFDE reacts upon heating to form an imidized oligomer having the theoretical structure: 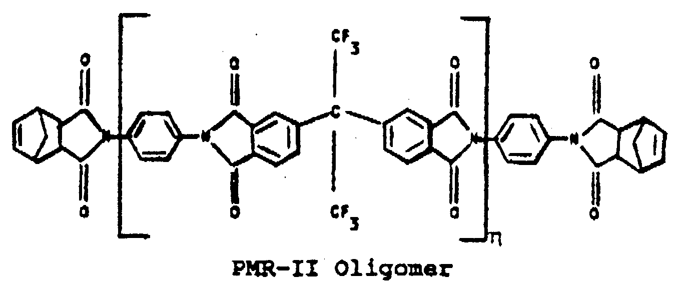
The monomeric molar ratio, and the average molecular weight of the imidized oligomer for a series of homologous PMR-II resins are given in Table 2.

**Table 2**

| Molar Ratio NE/HFDE/PPDA | Average MWP Oligomer | Resin Designation |
|---|---|---|
| 2/2.161/1.161 | 1000 | PMR-II 10 |
| 2/2.684/1.684 | 1270 | PMR-II 12.7 |
| 2/2.742/1.742 | 1300 | PMR-II 13 |
| 2/3.129/2.129 | 1500 | PMR-II 15 |
| 2/4.097/3.097 | 2000 | PMR-II 20 |
| 2/5.996/4.996 | 2980 | PMR-II 29.8 |
| 2/6.034/5.034 | 3000 | PMR-II 30 |
| 2/9.908/8.903 | 5000 | PMR-II 50 |
| 2/10.005/9.00 | 5050 | PMR-II 50.5 |

Analogous for compounds may be formulated by substituting other end cap monomers for the NE. Examples of other suitable end cap monomers include the monomethylester of itaconic acid (ITE), the monomethylester of 2,5-bicyclo (2.2.1) - heptadiene-2,3-dicarboxylic acid (NDE) and the monomethylester of maleic acid (MAE). 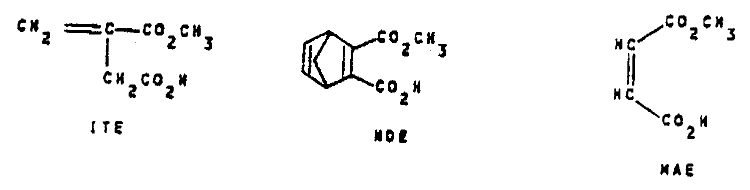
Processing aids may also be included in the reaction mixture. For example, N-phenylnadimide has been found to be useful as a reactive viscosity modifier to lower the melt viscosity.

The fiber reinforcement in the process of the present invention may comprise graphite fibers, carbon fibers, glass fibers, refractory ceramic fibers or silicon carbide fibers. Graphite fibers are preferred for applications in which high modulus fibers are required. Glass fibers are preferred in applications in which lower modulus fibers are acceptable. Woven fiber cloth, unidirectional fiber tapes or fiber rovings are impregnated with the solution of reaction mixture and the solvent is evaporated to form the "prepreg". Composite articles made by the process of the present invention typically include between about 30 volume percent and about 60 volume percent fiber reinforcement.

Single plies of prepreg may be pretreated according to the process of the present invention to form single plies of imidized prepreg and the plies of imidized prepreg may be laid up to form a laminated imidized prepreg. Alternatively, prepreg plies may be laid up to form a laminated prepreg and the laminated prepreg may be pretreated according to the present invention to form a laminated imidized prepreg. In either case, the laminated imidized prepreg of the present invention may be cured by conventional autoclave or compression molding techniques to form a fiber reinforced crosslinked polyimide matrix composite article that is substantially free of internal voids and surface blisters.

Heating the prepreg produces time dependent rheological and chemical changes in the reaction mixture. The parameters of the process of the present invention are determined from the relationships between apparent viscosity of the reaction mixture, temperature, and time.

The Figure shows the relationship between the apparent viscosity of a PMR-15 reaction mixture and temperature as the mixture was heated from 200°C at a rate of 5°C/minute. The apparent viscosity of the PMR-15 reaction mixture decreases as the mixture was heated from 200°C to 275°C. The viscosity decrease appears to be due to softening and melting of the fusible imidized intermediate. The viscosity of the reaction mixture increases as the mixture is further heated from 275°C to 303°C. At temperatures of 300°C the viscosity of the reaction mixture increases very rapidly. The increase in viscosity appears to be due to crosslinking of the oligomeric intermediate and gelation of the reaction mixture to form a crosslinked polyimide resin.

The viscosity of the reaction mixture decreases while the rate at which the crosslinked polyimide is formed increases with increasing temperature. Defining the critical temperature range for processing the prepreg according to the present invention involves balancing the decrease in the viscosity of the reaction mixture and the increase in the rate at which the oligomer reacts to form the crosslinked polyimide. At temperatures below 245°C, the viscosity of the reaction mixture is too high to permit removal of volatile components within a reasonable processing time, at temperatures above 265°C the crosslinking reaction is too rapid to permit removal of volatile components and still provide a substantially noncrosslinked prepreg. Heating prepreg piles of PMR reaction mixture impregnated fibers to a temperature between 245°C and 265°C for a time period between 30 minutes and 70 minutes has been found to be sufficient to form a low viscosity substantially noncrosslinked molten imide oligomer from which volatile components may be removed within a reasonable processing time. It is believed that very similar results would be obtained using the analogous reaction mixtures discussed above.

The prepreg is maintained at a temperature within the critical temperature range under subatmospheric pressure so that volatile impurities and volatile reaction products are removed from the prepreg during the heating process. It is preferred that the subatmospheric pressure correspond to a vacuum of greater than 26600 Pa (200mm of mercury) and particularly preferred that the subatmospheric pressure corresponds to a vacuum of between 66500 and 79800 Pa (500mm of mercury and 600mm of mercury).

The prepreg is subsequently cooled to produce a molding material, i.e. a partially cured material analogous to a conventional "B-stage" fiber prepreg material, which may be fully cured by further heating. Unlike conventional B-stage materials, the pretreated prepreg of the present invention is substantially free of volatile impurities and reaction products.

As noted above, laminated imidized fiber prepreg of the present invention may be consolidated and cured according to convention vacuum bag or compression molding procedures to form a composite article. For example, a laminated imidized fiber prepreg of the present invention may be consolidated and cured by heating the prepreg to an elevated temperature between 290°C and 320°C under superatmospheric pressure maintained under superatmospheric pressure at the elevated temperature for a time period between 1 hour and 2 hours to form the fiber reinforced crosslinked polyimide matrix composite article. It is preferred that a superatmospheric pressure of between 0.69 MPa (100 psi) and 13.79 MPa (2000 psi) be applied to the prepreg during the heating.

Finally, the fiber reinforced crosslinked polyimide matrix composite article so formed may be subjected to a conventional post cure, e.g. by maintaining the article at a temperature between 290°C and 320°C for a time period of between 18 hours and 24 hours.

The fiber reinforced polyimide matrix article formed by the process of the present invention is substantially free of internal voids and surface blisters.

While the process of the present invention is described primarily in terms of fiber reinforced polyimide matrix composite articles, it may be readily appreciated that the process provides similar advantages to particulate reinforced polyimide matrix articles and to nonreinforced polyimide articles.

### EXAMPLE

Celion 6000 reinforced PMR-15 matrix composite samples were laid up and cured by several different processes.

In an exemplary prior art process (process A) prepreg laminates were laid up, pretreated at 200°C in air under ambient pressure for one hour and then compression molded under 68.95 MPa (1,000 psi) pressure during heating to a temperature of 316°C and held for one hour at 316°C and 68.95 MPa (1,000 psi). During the temperature increase, the pressure was released periodically up to 270°C to allow volatile materials to escape from the mold.

In process B prepreg laminates were laid up and pretreated at 200°C under vacuum for 30 minutes in an autoclave. The vacuum was released, pressure 1.37 MPa (200 psi) was applied and the temperature was increased to 316°C for 1 hour to cure the laminate.

In process C prepreg laminates were pretreated at 250°C in air at ambient pressure for 1 hour. The pretreated prepreg laminates were cured by compression molding at 316°C and 68.95 MPa (1000 psi) for 1 hour.

In an exemplary process of the present invention (process D) prepreg laminates were pretreated at 250°C under vacuum for 1 hour. The pretreated prepreg laminates were cured by compression molding at 316°C and 68.95 MPa (1000 psi) for 1 hour.

In an exemplary process of the present invention (process E) prepreg laminates were pretreated at 260°C under vacuum for 1 hour. The pretreated prepreg laminates were cured by compression molding at 316°C and 68.95 MPa (1000 psi) for 1 hour.

Composite samples made by each of the above described processes were subjected to interlaminar shear testing and flexural testing. The interlaminar sheer strength at room temperature and at 316°C is given in Table I for each group of samples. The flexural strength and flexural modulus at room temperature and at 316°C are given in Table II for each group of samples.

Composite samples made by each of the above methods were subjected to a post cure. Samples at room temperature were introduced to a 316°C oven and post cured at 316°C for 16 hours. Post cured samples were inspected for surface blisters. Results of the inspection are given in Table I.

**Table I**

| Interlaminar Shear Properties of Celion 6000/PMR-15 Composites | | | | |
|---|---|---|---|---|
| Prepreg Pretreatment | Molding Method | Interlaminar Shear Strength MPa (ksi) | | Post Cure Blister Formation |
| | | RT | 316°C (600°F) | |
| A (200°C/1 hr/air) | Compression | 103.4 (15.0) | 40.6 (5.89) | Yes |
| B (200°C/0.5 hr/vacuum) | Autoclave | 109.6 (15.9) | 54.7 (7.94) | Yes |
| C (250°C/1 hr/air) | Compression | 81.3 (11.8) | 42.9 (6.23) | No |
| D (250°C/1 hr/vacuum) | Compression | 117.2 (17.0) | 51.2 (7.43) | No |
| E (260°C/1 hr/vacuum) | Compression | 112.4 (16.3) | 49.5 (7.19) | No |

**Table II**

| Flexural Properties of Celion 6000/PMR-15 Composites | | | | | |
|---|---|---|---|---|---|
| Prepreg Pretreatment | Molding Method | Flexural Properties | | | |
| | | Strenght MPa (ksi) | | Modulus 10⁶ MPa (10⁶psi) | |
| | | RT | 316°C (600°F) | RT | 316°C (600°F) |
| A (200°C/1 hr/air) | Compression | 1641 (238) | 723.9 (105) | 0.117 (17.1) | 0.108 (15.7) |
| B (200°C/0.5 hr/vacuum) | Autoclave | 1606.5 (233) | 786.0 (114) | 0.119 (17.3) | 0.116 (16.9) |
| C (250°C/1 hr/air) | Compression | 1641 (238) | 710.2 (103) | 0.128 (18.7) | 0.113 (16.4) |
| D (250°C/1 hr/vacuum) | Compression | 1820.2 (264) | 917.0 (133) | 0.125 (18.2) | 0.119 (17.4) |
| E (260°C/1 hr/vacuum) | Compression | 1689.2 (245) | 875.6 (127) | 0 125 (18.2) | 0.122 (17.8) |

The properties exhibited by the samples prepared by prior art process A provide a basis for comparing the improved properties exhibited by samples prepared by the method of the present invention. The samples prepared by process A exhibited surface blisters.

Compared to the samples prepared by process A, the samples prepared by process B exhibited higher shear strength and higher flexural modulus at both room temperature and 316°C (600°F) and exhibited comparable flexural strength at room temperature and higher flexural strength at 316°C (600°F). The samples prepared by process B exhibited surface blisters.

The samples prepared by process C exhibited properties comparable to the sampled produced by process B, but exhibited no surface blisters.

The samples produced by process D exhibited higher shear strength, higher flexural strength and higher flexural modulus than the samples produced by process A, at both room temperature and 316°C (600°F) and did not exhibit surface blisters.

The process of the present invention allows the fabrication of fiber reinforced crosslinked polyimide matrix composite article which are substantially free of internal voids and surface blisters.

## Claims

1. A method for pretreating a prepreg to form an imidized prepreg, comprising:
heating a prepreg, said prepreg comprising reinforcing fibers and a reaction mixture and said reaction mixture initially comprising an aromatic diamine, an end cap monomer and an aromatic dianhydride, a diester-diacid of an aromatic dianhydride or a tetracid of an aromatic dianhydride, and
subjecting the prepreg to subatmospheric pressure during the heating so that volatile impurities and volatile reaction products are removed from the prepreg,
wherein the imidized prepreg so formed is substantially free of volatile impurities and volatile reaction products, characterized in that the heating is carried out at a temperature between 245°C and 265°C for a time period between 30 minutes and 70 minutes, so that the reaction mixture forms a low viscosity non crosslinked matter imidized intermediate.

2. The method of claim 1, characterized in that the reaction mixture initially comprises 3, 3', 4, 4' benzophenone tetracarboxylic acid dianhydride dimethyl ester, 4,4' methylene dianiline, and the monomethyl ester of 5-norbornene 2, 3 dicarboxylic acid.

3. The method of claim 1, characterized in that the reaction mixture initially comprises 4,4' hexafluoroisopropylidene bis(phthalic acid), paraphenylene diamine and the monomethyl ester of 5-norbornene 2,3 dicarboxylic acid.

4. Method according to claim 1-3 characterized in comprising in addition
stacking plies of imidized prepreg to form a laminated imidized prepreg,
heating the laminated imidized prepreg under superatmospheric pressure to a second temperature in the range of 290-320°C for a second period of time of 1 to 2 hours, to form the fiber reinforced crosslinked polyimide matrix composite article by consolidating the plies and crosslinking the imide intermediate,
wherein the article so formed is substantially free of internal voids and surface blisters.

5. The method of claim 4, characterized in that the first temperature is between 245°C and 265°C, the first time period is between about 30 minutes and 70 minutes, the second temperature is between 290°C and 320°C and the second time period is between 1 hour and 2 hours.

6. The method of claim 4 characterizing in additionally comprising heating the fiber reinforced crosslinked polyimide matrix composite article to a temperature between 290°C and 320°C for a time period between 18 hours and 24 hours to form a post cured fiber reinforced crosslinked polyimide matrix composite article, wherein the post cured fiber reinforced crosslinked polyimide matrix composite article so formed is substantially free of internal voids and surface blisters.

7. Method according to claims 1-3 characterized in that before heating the prepreg, a plurality of plies of prepreg are stacked to form a laminated prepreg and after heating the laminated prepreg for obtaining a laminated imidized prepreg, said laminated imidized prepreg is heated under superatmospheric pressure to a second temperature in the range of 290-320°C for a second period of time of 1 to 2 hours, to form the fiber reinforced crosslinked polyimide matrix composite article by consolidating the plies and crosslinking the imide intermediate,
wherein the article so formed is substantially free of internal voids and surface blisters .

8. The method of claim 7, characterized in that the first temperature is between 245°C and 265°C, the first time period is between 30 minutes and 70 minutes, the second temperature is between 290°C and 320°C and the second time period is between 1 hour and 2 hours.

9. The method of claim 7 characterized in additionally comprising heating the fiber reinforced crosslinked polyimide matrix composite article to a temperature between 290°C and 320°C for a time period between 18 hours and 24 hours to form a post cured fiber reinforced crosslinked polyimide matrix composite article, wherein the post cured fiber reinforced crosslinked polyimide matrix composite article so formed is substantially free of internal voids and surface blisters.

## Patentansprüche

1. Verfahren zum Vorbehandeln eines Prepreg, um ein imidisiertes Prepreg zu bilden, umfassend:
Erhitzen eines Prepreg, wobei dieses Prepreg verstärkende Fasern und eine Reaktionsmischung umfaßt und die Reaktionsmischung anfänglich ein aromatisches Diamin, ein Kettenabschluß-Monomer und ein aromatisches Dianhydrid, eine Diester-disäure eines aromatischen Anhydrids oder eine Tetrasäure eines aromatischen Dianhydrids umfaßt und
Unterwerfen des Prepreg einem geringeren als atmosphärischen Druck während des Erhitzens, so daß flüchtige Verunreinigungen und flüchtige Reaktionsprodukte aus dem Prepreg entfernt werden,
wobei das so gebildete imidisierte Prepreg im wesentlichen frei ist von flüchtigen Verunreinigungen und flüchtigen Reaktionsprodukten,
dadurch gekennzeichnet, daß
das Erhitzen bei einer Temperatur zwischen 245°C und 265°C für eine Zeitdauer zwischen 30 Minuten und 70 Minuten ausgeführt wird, so daß die Reaktionsmischung ein nicht vernetztes, imidisiertes Zwischenprodukt geringer Viskosität bildet.

2. Verfahren nach Anspruch 1, dadurch gekennzeichnet, daß die Reaktionsmischung anfänglich 3,3',4,4'-Benzophenontetracarbonsäuredianhydriddimethylester, 4,4'-Methylendianilin und den Monomethylester von 5-Norbornen-2,3-dicarbonsäure umfaßt.

3. Verfahren nach Anspruch 1, dadurch gekennzeichnet, daß die Reaktionsmischung anfänglich 4,4'-Hexafluorisopropyliden-bis(phthalsäure), p-Phenylendiamin und den Monomethylester von 5-Norbornen-2,3-dicarbonsäure umfaßt.

4. Verfahren nach Anspruch 1 bis 3, dadurch gekennzeichnet, daß es zusätzlich umfaßt
Stapeln von Schichten imidisierten Prepregs zur Bildung eines laminierten imidisierten Prepregs,
Erhitzen des laminierten imidisierten Prepregs unter einem höheren als atmosphärischem Druck auf eine zweite Temperatur im Bereich von 290-320°C für eine zweite Zeitdauer von 1 bis 2 Stunden, um einen faserverstärkten, vernetzten Verbundgegenstand mit einer Polyimidmatrix durch Verdichten der Schichten und Vernetzen des Imidzwischenproduktes zu bilden,
wobei der so gebildete Gegenstand im wesentlichen frei ist von inneren Hohlräumen und Oberflächenblasen.

5. Verfahren nach Anspruch 4, dadurch gekennzeichnet, daß die erste Temperatur zwischen 245°C und 265°C, die erste Zeitdauer zwischen etwa 30 Minuten und 70 Minuten, die zweite Temperatur zwischen 290°C und 320°C und die zweite Zeitdauer zwischen 1 Stunde und 2 Stunden liegen.

6. Verfahren nach Anspruch 4, dadurch gekennzeichnet, daß es zusätzlich umfaßt das Erhitzen des faserverstärkten, vernetzten Verbundgegenstandes mit einer Polyimidmatrix auf eine Temperatur zwischen 290°C und 320°C für eine Zeitdauer zwischen 18 Stunden und 24 Stunden, um einen nachgehärteten, faserverstärkten, vernetzten Polyimidmatrix-Verbundgegenstand zu bilden, wobei der so gebildete nachgehärtete, faserverstärkte, vernetzte Polyimidmatrix-Verbundgegenstand im wesentlichen frei ist von inneren Hohlräumen und Oberflächenblasen.

7. Verfahren nach den Ansprüchen 1 bis 3, dadurch gekennzeichnet, daß vor dem Erhitzen des Prepregs eine Vielzahl von Prepregschichten gestapelt wird, um ein laminiertes Prepreg zu bilden, und nach dem Erhitzen des laminierten Prepregs zum Erhalten eines laminierten imidisierten Prepregs, das laminierte imidisierte Prepreg unter einem höheren als atmosphärischem Druck auf eine zweite Temperatur im Bereich von 290-320°C für eine zweite Zeitdauer von 1 bis 2 Stunden erhitzt wird, um den faserverstärkten, vernetzten Polyimidmatrix-Verbundgegenstand durch Verdichten der Schichten und Vernetzen des Imid-Zwischenproduktes zu bilden,
wobei der so gebildete Gegenstand im wesentlichen frei ist von inneren Hohlräumen und Oberflächenblasen.

8. Verfahren nach Anspruch 7, dadurch gekennzeichnet, daß die erste Temperatur zwischen 245°C und 265°C, die erste Zeitdauer zwischen 30 Minuten und 70 Minuten, die zweite Temperatur zwischen 290°C und 320°C und die zweite Zeitdauer zwischen 1 Stunde und 2 Stunden liegen.

9. Verfahren nach Anspruch 7, dadurch gekennzeichnet, daß es zusätzlich umfaßt das Erhitzen des faserverstärkten, vernetzten Verbundgegenstandes mit einer Polyimidmatrix auf eine Temperatur zwischen 290°C und 320°C für eine Zeitdauer zwischen 18 Stunden und 24 Stunden, um einen nachgehärteten, faserverstärkten, vernetzten Polyimidmatrix-Verbundgegenstand zu bilden, wobei der so gebildete nachgehärtete, faserverstärkte, vernetzte Polyimidmatrix-Verbundgegenstand im wesentlichen frei ist von inneren Hohlräumen und Oberflächenblasen.

## Revendications

1. Un procédé pour prétraiter une feuille préimprégnée pour former une feuille préimprégnée imidisée, comprenant:
chauffer une feuille préimprégnée, cette feuille préimprégnée comprenant des fibres de renforcement et un mélange réactionnel et ce mélange réactionnel au départ comprenant une diamine aromatique, un monomère d'arrêt de chaîne et un dianhydride aromatique, un diester-diacide d'un dianhydride aromatique ou un tétracide d'un dianhydride aromatique, et
soumettre la feuille préimprégnée à une pression subatmosphérique pendant le chauffage de sorte que les impuretés volatiles et les produits des réactions volatils sont éliminés de la feuille préimprégnée,
de sorte que la feuille préimprégnée imidisée ainsi formée soit sensiblement libre d'impuretés volatiles et de produits de réactions volatils, caractérisé en ce que l'étape de chauffer est mise en oeuvre à une température entre 245°C et 265°C pendant une période de temps entre 30 minutes et 70 minutes, de sorte que le mélange de réaction forme un intermédiaire imidisé à matière non-réticulée de faible viscosité.

2. Procédé selon la revendication 1 caractérisé en ce que le mélange de réaction au départ comprend le dianhydride diméthyl ester, de l'acide 3, 3', 4, 4' benzophénone tétracarboxylique, la 4, 4' méthylène dianiline, et le monométhyl ester de l'acide 5-norbornène 2, 3 dicarboxylique.

3. Procédé selon la revendication 1, caractérisé en ce que le mélange de réaction au départ comprend l'acide 4, 4' hexafluoroisopropylidène bis (phthalique), la paraphénylène diamine et le monométhyl ester de l'acide 5-norbornène 2,3 dicarboxylique.

4. Procédé selon les revendications 1-3, caractérisé en ce qu'il comprend en outre
empiler des couches de feuilles préimprégnées imidisées pour former un élément stratifié de feuilles préimprégnées imidisées,
chauffer l'élément stratifié de feuilles préimprégnées imidisées à pression suratmosphérique jusqu'à une seconde température dans l'intervalle de 290-320°C pendant une deuxième période de temps de 1 à 2 heures, pour former l'article composite à matrice de polyimide réticulé renforcée de fibres par consolidation des couches et réticulation de l'intermédiaire imide,
de sorte que l'article ainsi formé est sensiblement libre de vides internes et de cloques à la surface.

5. Procédé selon la revendication 4, caractérisé en ce que la première température se situe entre 245°C et 265°C, la première période de temps est entre environ 30 minutes et 70 minutes, la seconde température est entre 290°C et 320°C et la seconde période de temps est entre 1 heure et 2 heures.

6. Procédé selon la revendication 4, caractérisé en ce qu'il comprend, en outre, le chauffage de l'article composite à matrice de polyimide réticulé renforcée de fibres jusqu'à une température entre 290°C et 320°C pendant une période de temps entre 18 heures et 24 heures pour former un article composite à matrice de polyimide réticulé renforcée de fibres post-durci, de sorte que l'article composite à matrice de polyimide réticulé renforcée de fibres post-durci ainsi formé est sensiblement libre de vides internes et de cloques à la surface.

7. Procédé selon les revendications 1-3, caractérisé en ce que avant de chauffer la feuille préimprégnée, une pluralité de couches de feuilles préimprégnées sont empilées pour former des feuilles préimprégnées laminées et après le chauffage les feuilles préimprégnées laminées pour obtenir des feuilles préimprégnées imidisées laminées, ces feuilles préimprégnées imidisées laminées sont chauffées à pression suratmosphérique jusqu'à une seconde température dans l'intervalle de 290-320°C pendant une seconde période de temps de 1 à 2 heures, pour former l'article composite à matrice de polyimide réticulé renforcé de fibres par consolidation des couches et réticulation de l'intermédiaire imide,
de sorte que l'article ainsi formé est sensiblement libre de vides internes et de cloques à la surface.

8. Procédé selon la revendication 7 caractérisé en ce que la première température est entre 245°C et 265°C, la première période de temps est entre 30 minutes et 70 minutes, la seconde température est entre 290°C et 320°C et la seconde période de temps est entre 1 heure et 2 heures.

9. Procédé selon la revendication 7, caractérisé en ce qu'il comprend, en outre, chauffer l'article composite à matrice de polyimide réticulé renforcée de fibres jusqu'à une température entre 290°C et 320°C pendant une période de temps entre 18 heures et 24 heures pour former un article composite à matrice de polyimide réticulé renforcée de fibres post-durci, de sorte que l'article composite à matrice de polyimide réticulé renforcée de fibres post-durci ainsi formé est sensiblement libre de vides internes et de cloques à la surface.
